# EUROPEAN PATENT APPLICATION

(11) **EP 1 168 164 A2**
(43) Date of publication of application: **02.01.2002**
(21) Application number: 01101971.8
(22) Date of filing: 29.01.2001
(51) Int. Cl.: G06F 9/445

(54) **Method of updating program in stored program control unit, and stored control program unit**

(30) Priority: 25.05.2000 JP 2000159549
(71) Applicant: Hitachi, Ltd., Chiyoda-ku, Tokyo 101-8010 (JP); Hitachi Software Engineering Co., Ltd., Yokohama-Shi Kanagawa-Ken 231-0015 (JP)
(72) Inventor: Goto, Shojo, Hitachi Ltd., Intell. Proper. Group, , Chiyoda-ku, Tokyo 100-8220 (JP); Yamamoto, Masanobu, Hitachi Ltd., Inte. Pro. Group, , Chiyoda-ku, Tokyo 100-8220 (JP); Kinoshita, Toshio, Hitachi Ltd., Inte. Pro. Group, , Chiyoda-ku, Tokyo 100-8220 (JP); Kobayashi, Takanao, Hitachi Software Engin. Co.Ltd, Yokohama-shi, Kanagawa 231-0015 (JP)
(74) Representative: Strehl Schübel-Hopf & Partner

(57) **Abstract**

The present invention relates generally to the updating of control programs using the Internet. More particularly techniques are provided for the automatic and safe updating of a control program in a stored control program unit of a computer system.. A specific embodiment provides security and reduces the cost of updating a control program by first, executing the instruction to update the control program using a first connection, for example a public telephone line, and then using a second connection via the Internet to download the update to the control program.

## Description

### CROSS-REFERENCES TO RELATED APPLICATIONS

This application is related to and claims priority from Japenese patent application No. 2000-159549, filed on May 25, 2000.

### BACKGROUND OF THE INVENTION

The present invention relates generally to the updating of control programs using the Internet. More particularly techniques are provided for the automatic and safe updating of a control program in a stored control program unit of a computer system.

Many devices comprising a computer system contain control programs to realize the function of each device. Generally, a device vendor develops the control programs as a unit with the design of the hardware of each device. It is well known that such a stored control program unit requires the update of the control program by the reason of adding new functions, improving the performance or correcting malfunctions like other software.

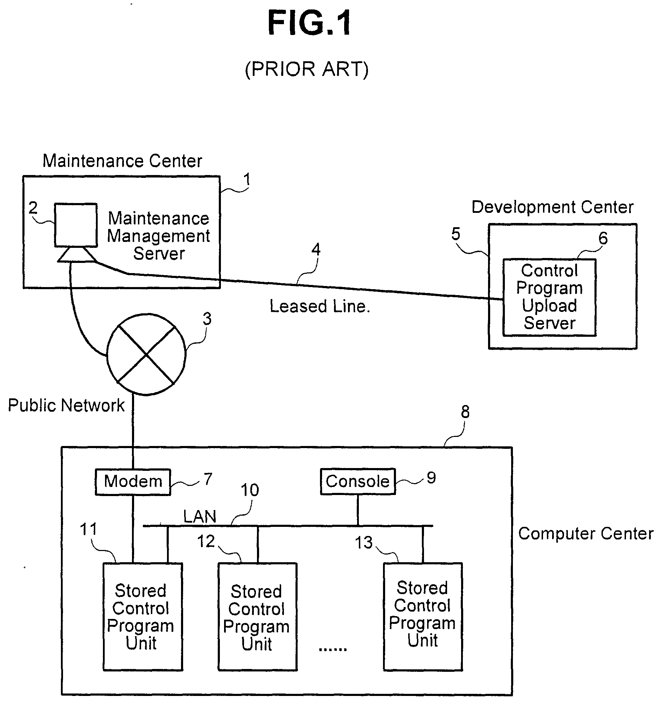

One conventional approach is for the device vendor to develop the control program updates, for example, firmware updates, and store them on a resident server. A Personal Computer (PC) connected to the device controller, may request and download an update program from the server at the device vendor using, for example, a file transfer program (ftp). The instructions of the update program, when executed, retrieve the control program update from the server and then uses the control program update to update the control program on the device. The problem with this approach is that developer of the control updates and the maintainer of the updates are in one location. However, for the maintenance of updates at computer centers, typically, the development center and maintenance center are in separate locations. In addition the maintenance center decides on when the control program needs to be updated, rather than having the device or PC located at the computer center decide on when an update is needed. Thus, typically, an update of the control program at a computer center has been generally executed by a system shown in FIG. 1 (PRIOR ART).

In FIG. 1, a maintenance center 1 is a base point for instructing the maintenance work of monitoring the operating state of the computer centers which are interspersed at various places, investigating the cause of generated failures, and executing the countermeasures for failures. The maintenance center 1 includes a maintenance management server 2 for giving the maintenance instructions . The maintenance center 1 and a computer center 8 are connected by a public telephone network 3. A development center 5 is a base point for the development of the control programs for stored control program units 11, 12 and 13 installed in the computer center 8 . The development center includes a control program upload server 6 stored with the developed control programs. The latest control programs or the latest versions of the control programs corresponding to the kinds of the device controllers in the computer center 8 and partial programs (patches) for the temporary countermeasures for the failures are stored in the control program upload server 6. The control program upload server 6 is connected with the maintenance center 1 through a leased line 4 and enabled with the file upload of control program upload data and control programs. The computer center 8 includes, a modem 7 connected to a "master" stored control program unit 11. The "master" unit 11 is connected to the "slave" stored control program units 12 and 13.. A modem 7 is connected with the public telephone network 3 and controls communications with the maintenance center 1. A Local Area Network (LAN) 10 connects the stored control program units 11, 12, 13 and a console unit 9 for operating these units. The maintenance operation from the maintenance center 1 to the stored control program units 12 and 13 can be executed through the modem 7 and stored control program unit 11. When the update of the control program is required, a necessary control program is transferred from the control program upload server 6 installed in the development center 5 to the maintenance center 1 through the leased line 4 using the maintenance management server 2 in the maintenance center 1.

Then, the maintenance center 1 is connected to modem 7 , which is connected to stored control program unit 11 in the computer center 7 via the public telephone network 3 . The maintenance management server 2 transfers the updated control program and an instruction to execute processing of the update to the stored control program unit 11 via modem 7, which in turn distributes the information to the stored control program units 12, and 13. When a stored control program unit receives the instruction, it executes the update processing of the control program inside it.

The prior art described above requires the installation of a leased line between a maintenance center and a development center to upload control programs. When the leased line is installed, the continuous payment of connection fees to a provider of the leased line is generated. Even if the public telephone network is used instead of the leased line, the connection fee is generated each time the control program is transferred. Since the size of the control program is being expanded with the recent improvement of the function of the stored control program unit, the connection fee of public network, which is slow, but charged on distance and time with transferring the control programs, will cost more and more in the future.

There is an additional problem when the public telephone network is used for the transfer of control programs between the maintenance center and two or more computer centers. In this the time and the connection fee for the transfer is proportional to the number of the computer centers since the transfer must be repeated for each computer center. Thus the cost is significantly increased.

Further there is the problem of security if the computer center requests an update from the maintenance management server. Care must be taken in transferring the maintenance management server access codes to the computer center, so that the computer center can download the updates from the maintenance management server. If the same communication lines are used to receive the access codes, as well as the downloaded data, there is an increase security risk that the access codes may be compromised.

Thus there is a need for techniques that reduce the cost of the transfer of updates and/or maintains security.

### SUMMARY OF THE INVENTION

According to the present invention, techniques including a method and system for acquiring update information for control programs of a device controller are provided. A specific embodiment provides security and reduces the cost of updating a control program of a device controller by first, executing the instruction to update the control program using a first connection, for example a public telephone line, and then using a second connection via the Internet to download the update to the control program.

An alternative embodiment of the present invention includes a maintenance management server installed in a maintenance center, which sends the instruction to update a control program of a storage system, having a plurality of disk controllers (DKC's), located in a computer center to a specialized disk controller of the plurality of disk controllers through a public network. Receiving the instruction, the specialized disk controller instructs a download controller to download an update program to the control program from a control program upload server located at a Development center via the Internet. The downloaded update program is temporarily stored in the download controller, and then distributed to the plurality of disk controllers. The update processing for each disk controller of the plurality of disk controllers is executed inside the respective disk controller.

In another embodiment of the present invention, a stored control program unit is provided with a maintenance communication means for receiving a control program update instruction and authentication data necessary for the connection with the control program upload server, a data communication means for receiving the control program transferred from the control program upload server, and a program update means for storing the control program received by the data communication means into the control program storing area inside a control program controller. The maintenance communication means of the stored control program unit and the maintenance management server are connected by the public network as before.

Yet another embodiment of the present invention provides a repeating unit, one gate of which is connected with the stored control program unit through the Local Area Network and another gate is connected with the Internet. When the maintenance management server instructs the update of the control program to the stored control program unit, the maintenance management server transmits the authentication data necessary for the connection with the control program upload server to said stored control program unit through the public network; then the stored control program unit transmits the authentication data to the control program upload server through the repeater unit and the Internet, and the repeater unit receives the control program from the control program upload server after the connection with the control program upload server is established. Further, the repeater unit transfers the control program to the stored control program unit after reception of the control program and the stored control program unit executes the update processing of the control program after the transfer is completed. When the control program has been already transferred to the repeater unit, the transfer of the control program from the control program upload server is not executed and the repeater unit transfers the already transferred control program to the stored control program unit.

As described above, by using the already installed Internet, the time required for the transferring of the control program can be reduced and the simultaneous transferring of the control programs to the two or more computer centers is enabled. In addition since Internet costs are typically fixed fee to a local provider, connection, usage time , and distance fees are greatly reduced. By transmitting the update instruction of the control program and the authentication data from the maintenance center to the computer center directly through the public network, the potential problem of an intentional update of the control program by a third person may be prevented.

These and other embodiments of the present invention are described in more detail in conjunction with the text below and attached figures.

### BRIEF DESCRIPTION OF THE DRAWINGS

FIG. 1 (PRIOR ART) is a block diagram illustrating the configuration of a system applied with the conventional method of automatically updating control programs.
FIG. 2 is a block diagram of an embodiment of the present invention, illustrating a system for the automatic update of a control program.
FIG. 3A shows a configuration diagram for updating the control program of a disk controller of an embodiment of the present invention.
Fig. 3B shows a flowchart for the DKC Download Controller of an embodiment of the present invention
FIG. 4A shows a remote console used in the updating of the control program of an embodiment of the present invention.
Fig. 4B shows a flowchart for the RMC Download Controller of one embodiment of the present invention.
FIG. 5 is a sequence chart illustrating the processing operation when instructing the continuous execution of the automatic upload and the automatic update of control programs of an embodiment of the present invention.
FIG. 6 shows a sequence chart showing the operation of executing the automatic upload only of another embodiment of the invention.
FIG. 7 shows a sequence chart showing the operation of executing the automatic update only of yet another embodiment of the invention.
FIG. 8 is a hardware configuration diagram illustrating the inner structure of a DKC of an embodiment of the present invention.
FIG. 9 is a hardware configuration diagram illustrating the inner structure of an SVP of an embodiment of the present invention.
FIG. 10 is a hardware configuration diagram illustrating the inner structure of an RMC of an embodiment of the present invention.
FIG. 11 is a data flow diagram of an embodiment of the present invention illustrating the flow of data between the centers.
FIG. 12 is an illustrating chart of an example of the screen output of update instruction displayed on a maintenance management server.
FIG. 13 is a data format chart of data of an embodiment of the present invention.
FIG. 14 is a data format chart of data that the maintenance management server transfers to SVP of an embodiment of the present invention.
FIG. 15 is a data format chart of data that the SVP of DKC transmits to RMC of an embodiment of the present invention.
FIG. 16 is a chart illustrating an example screen of update result list displayed by a maintenance management server receiving exchange processing result.
FIG. 17 is a chart illustrating an example screen displaying the result of update status of a current DKC acquired from a maintenance management server.
FIG. 18 is a data flow chart executing another embodiment of the present invention.
FIG. 19 is a software configuration diagram executed on a control program upload server 106 of an embodiment of the present invention.
FIG. 20 is a data flow chart in case customer issues update request of an embodiment of the present invention.
FIG. 21 is a hardware connection configuration diagram, when between a maintenance center and a computer center is connected as a network of TCP/IP through the public network of an embodiment of the present invention.
FIG. 22 is a data format chart of data of an embodiment of the present invention.
FIG. 23 is a software configuration diagram of request input of an embodiment of the present invention.
FIG. 24 is a software configuration diagram of a customer information management server of an embodiment of the present invention.
FIG. 25 is a hardware connection diagram in case of the Internet connection among the maintenance center, the development center, the computer center, the customer management center, and the customer office of an embodiment of the present invention.
FIG. 26 is a software configuration diagram in case a SVP is connected with a customer Intranet of an embodiment of the present invention.
FIG. 27 is a software configuration diagram of an RMC equipped with a security function of an embodiment of the present invention.

### DESCRIPTION OF THE SPECIFIC EMBODIMENTS

The following are descriptions of embodiments of the present invention with reference to the drawings.

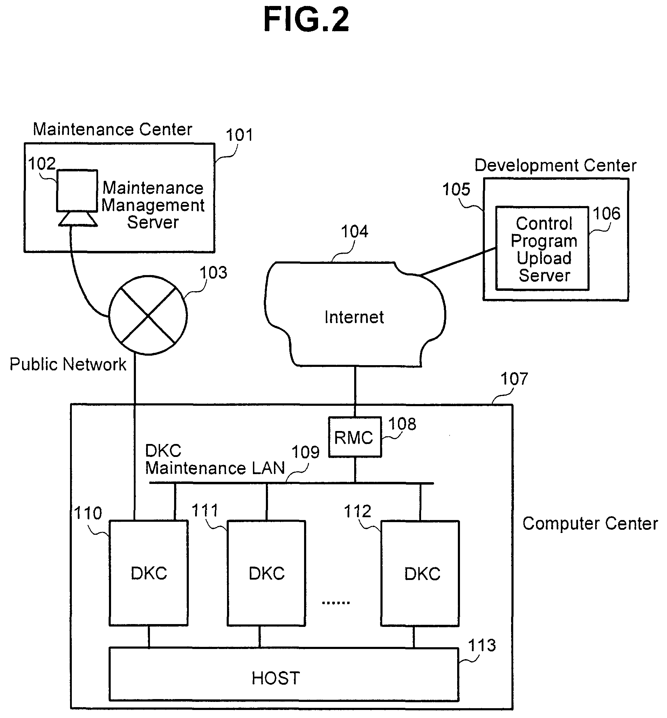

FIG.2 is a block diagram of an embodiment of the present invention showing an automatic program update system. A maintenance center 101 is a base point for maintenance such as, monitoring the operating state of computer centers in various locations, investigating the cause of failures when the failures occur, and devising countermeasures, for example software patches, for failures. The maintenance center 101 is provided with a maintenance management server 102 for instructing the maintenance work. The maintenance center 101 and the computer center 107, which is the recipient of the maintenance, are connected by the public telephone network 103. When a failure occurs at the computer center 107, a failure message is reported from the computer center 107 to the maintenance center 101 through the public network 103. When maintenance work from the maintenance center 101 is required, the maintenance center 101 contacts the computer center 107 through the public telephone network 103 and performs the necessary maintenance work.

The computer center 107, for example, comprises disk controllers DKC 110, DKC 111 and DKC 112 which are the recipients of the maintenance, and a remote console (RMC) 108 for operating these controllers. A specialized DKC 110 is connected to the public network 103 and controls communication with the maintenance center 101. A DKC maintenance LAN 109, comprising a Local Area Network (LAN), connects together the DKC's. The maintenance operation from the maintenance center 101 to DKC 111 and DKC 112 can be executed through DKC 110. The RMC 108 can similarly control the operation of all the DKC's installed inside the computer center, for example DKC 110, DKC 111 and DKC 112, through the LAN 109.. In one embodiment a disk controller of the plurality of disk controllers includes a DKC download controller, a program update controller, and a program file. And a specialized disk controller further includes a maintenance center communication controller. And in another embodiment the remote console download controller includes a RMC Download controller and a program file.

In the above embodiment of the present invention, three controllers are shown for illustration purposes only, and should not be construed as a limitation on the present invention. In other embodiments of the present invention four, five or more controllers may be used. In addition other kinds of devices, such as central processing units (CPU), FPGA's, graphics cards, routers, network switches, hubs, back-up drives, CD/DVD players, copier machines, FAX machines, PDA's, office or home appliances, scanners, or printers and the like, can be included as the maintenance recipients, i.e., substituted in place of the DKC's. Thus in an alternative embodiment "device controllers" are substituted for the DKC's. A first device controller replaces DKC 110, and includes a modem or network card to communicate with Maintenance center 101. A second and third device controller replace DKC 111 and 112 and are coupled with the first device 110 via, for example, a direct connection cable, LAN, or intranet. There are one or more device controllers in this embodiment and three are described for illustration purposes only.

FIG. 2 shows that, optionally, each of the DKCs 110, 111 and 112 may be connected with the host unit 113.

A development center 105 is a center for developing the control program of the disk controllers DKC 110, 111 and 112 installed in the computer center 107. A control program upload server 106 stores the developed control programs. The latest control programs corresponding to the kinds of the controllers and partial program patches for temporary countermeasures are stored in the control program upload server 106. The control program upload server 106 is connected to the Internet 104, and data services and file transfer to the maintenance center 101 and the computer center 107 are enabled.

The update of the control program built into the disk controllers DKC 110, 111 and 112 installed in the computer center 107 is executed in one embodiment of the present invention, with the following procedure. The upload and the update instruction of the control program is issued from the maintenance management server 102 installed in the maintenance center 101 to DKC 110 through the public network 103. When receiving the instruction, the DKC 110 instructs the RMC 108 to download the control program update from the control program upload server 106. Next, the RMC 108 executes the download of the control program from the control program upload server 106 through the Internet 104. Then, the downloaded control program is temporarily stored in the RMC 108 and is transferred to the DKC 110, 111 and 112. The update of the control program transferred to the DKC 110, 111 and 112 is executed in each DKC. In another embodiment, only some of the DKC's may have the same version of control program software. Thus, for example, only DKC's 110 and 112, may be updated. DKC 111 may remain the same.

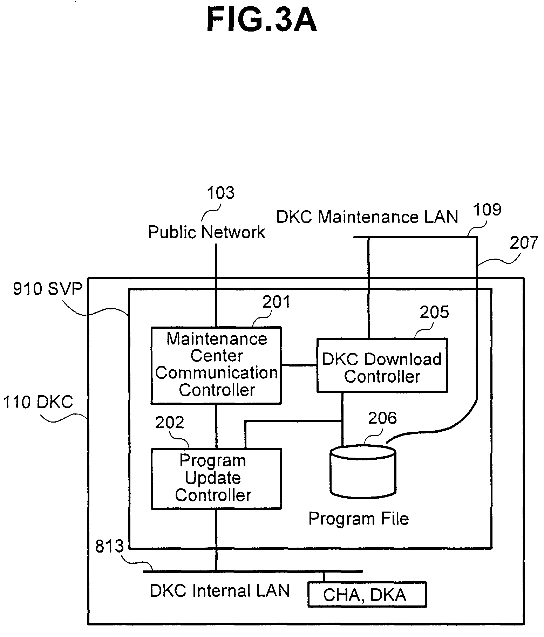

FIG. 3A is a block diagram showing the software configuration of an embodiment of the present invention, when the Service Processor (SVP) 910 provided inside the DKC 110 instalied in the computer center 107 executes the update method of the control program. The SVP 910 includes: a maintenance center communication controller 201 controlling the communication with the maintenance center 101 via the public network 103; a DKC download controller 205 controlling the communication with the other DKC's 111, 112, and RMC 108 through the DKC maintenance LAN 109; a program file 206 storing the downloaded control program; a program update controller 202 expanding the control program stored in the program file 206 into the memory of the built-in processor; and a DKC internal LAN 813 for communicating with the processors inside the CHA and DKA which are the objects of program update

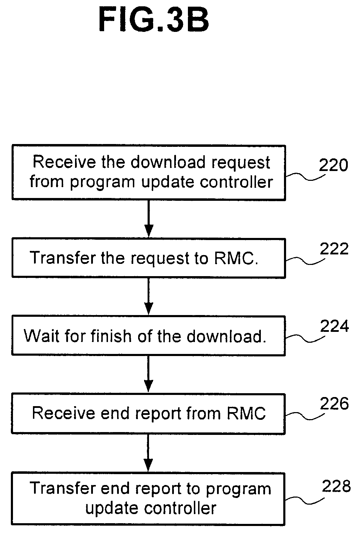

Fig. 3B shows a flowchart for the DKC Download Controller 205 of a first embodiment of the present invention. Initially, the download request comes from the maintenance center 101 to the maintenance center communication controller 201. The download request is then transferred to the program update controller 202. At step 220 the DKC Download Controller 205 receives the download request from the Program Update Controller 202. Then at step 222 the DKC Download Controller 205 sends the file transfer request to the RMC 108. The RMC 108 downloads the data directly to the Program File 206. While the RMC is downloading the file, the DKC Download Controller 205 waits for the download process to finish (step 224). Then at step 226 the DKC Download Controller 205 receives the end report from the RMC 108 and sends, at step 228, the end report to the Program Update Controller 202.

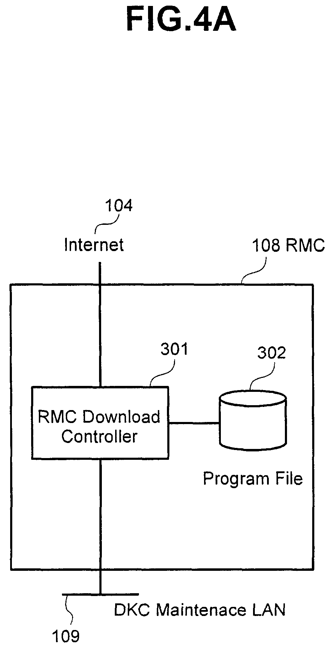

FIG. 4A is a block diagram showing the configuration relating to the control data update system of the RMC 108 installed in the computer center 107 of an embodiment of the present invention. The RMC 108 comprises an RMC download controller 301 connecting with the Internet 104 and with the DKC maintenance LAN 109 and the program file 302 temporarily storing the control program of the DKC(s).

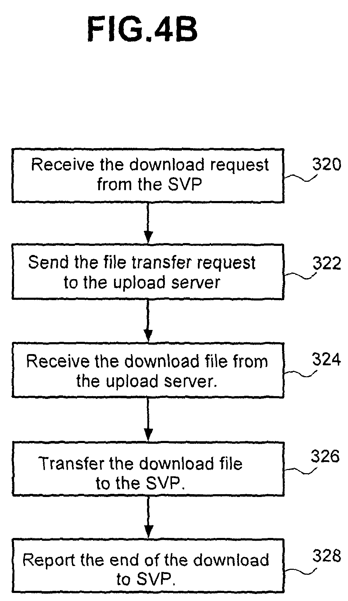

Fig. 4B shows a flowchart for the RMC Download Controller 301 of one embodiment of the present invention. At step 320 the RMC Download Controller 301 receives the download request from the DKC download Controller 205 in the SVP 910. At step 322 the RMC Download Controller 301 sends the file transfer request to the control program upload server 106 by using the server access and file information in the download request. At step 324, the RMC Download Controller 301 receives the download file from the upload server 106 and saves this file to the Program file 302. Next the download file in the Program file 302 is transferred to the Program File 206 in the SVP 910 by the RMC Download Controller 301 (step 326). Lastly at step 328, the RMC Download Controller 301 reports the end of the download to the DKC download controller 205.

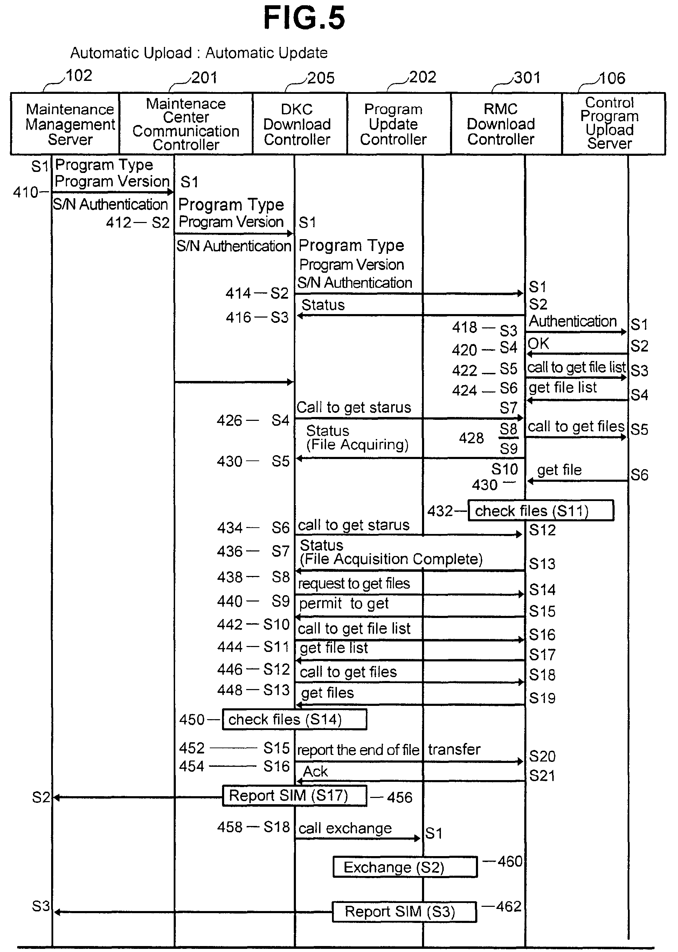

The following is a detailed explanation of the operation of the automatic update processing of the control program referring to FIG. 5 to FIG. 7 of a second embodiment of the present invention. In this embodiment the connection 207 is absent.

FIG. 5 is a sequence chart showing the processing operation in case the maintenance center 101 instructs the continuous execution of the automatic upload and the automatic update of the control program of an embodiment of the present invention. The maintenance management server 102 transmits a Control Program Type, a Program Version, the serial number of object DKC and the authentication data through the public telephone network to the maintenance center communication controller 201 in the DKC 110 ( step 410). The maintenance center communication controller 201 transfers said data received to the DKC download controller 205 and instructs the start of download of the control program step 412. The instructed DKC download controller 205 transfers the Program Type of the control program, the Program Version, the serial number and the authentication data received through the LAN 109 to the RMC download controller 301 operating in the RMC 108 and instructs the execution of the download of the control program from the control program upload server 106 in the development center 105 ( step 414). The RMC download controller 301 checks whether the control program corresponding to the data received from step 414 is stored in the program file 302 and responds with the result to the DKC download controller 205 (step 416). If the control program is stored in RMC program file 302, then this program is sent to DKC 110. Hereafter, the description is with the preposition that the program is not stored in the program file 302.

Therefore, at the current step 414, the RMC download controller 301 responds to the DKC download controller 205 with the status of "files not acquired" ( step 416). With this, the RMC download controller 301 starts the download processing of the corresponding control program from the control program upload server 106. In executing download, the RMC download controller 301 transmits the authentication data generated from the maintenance management server 102 to the control program upload server 106 ( step 418). Receiving the authentication data, the control program upload server 106 verifies the authentication data and responds the result to the Internet controller 301 with an "OK" (step 420), when the authentication is verified.. Then, the RMC download controller 301 requests the transmission of file list constituting the control program to the control program upload server 106 ( step 422). Receiving the request, the control program upload server 106 transmits the file list to the RMC download controller 301 (step 424). The RMC download controller 301 requests file transfer from the control program upload server 106 (step 428) corresponding to the received file list Receiving the request, the control program upload server 106 transmits the corresponding files to the RMC download controller 301 (step 430).

The RMC download controller 301 stores the received files to the program file 302 in sequence and executes the consistency inspection of the file contents when the all of the requested files are stored (step 432).

The DKC download controller 205 which received the response of the "files not acquired" status (step 416) issues at a certain interval the "file acquisition state acquire command" (step 426) to the RMC download controller 301. The RMC download controller 301 responds the "file acquiring" status (step 433) to the "file acquisition state acquiring command" (step 426) before the file acquisition is completed.

The DKC download controller 205 which receives that "file acquiring" status (step 433) issues the "file acquisition state acquire command" again after a certain time is elapsed (step 434) and acquires the status ). If the file acquisition status is the "file acquisition complete" (step 436), the DKC download controller 205 requests the start of the control program transfer procedure to the RMC download controller 301 (step 438).

Receiving the request, the RMC download controller 301 responds with request permitted (step 440). The DKC download controller 205 receiving the permission requests the acquisition of the file list comprising the control program to the RMC download controller 301 (step 442), which is similar to the procedure that the RMC download controller 301 uses when it downloads the files from the control program server 106,. The DKC download controller acquires the file list (step 444), and then requests the file transfer from the RMC download controller 301 (step 446).

The RMC download controller 301 reads out the files from the program file 302 in the RMC 108 and transmits the files to the DKC download controller 205 (step 448). The DKC download controller 205 stores the received files into the program file 206 in sequence , and executes the inspection of the consistency of the file contents when storing all of the requested files is completed (step 450).

After the inspection of the consistency of the file contents, the DKC download controller 205 transmits the end of the file transfer request to the RMC download controller 301 (step 452). Receiving the end notice , the RMC download controller 301 transmits the acknowledgement to the DKC download controller 205 (step 454). When the DKC download controller 205 receives the confirmation (Ack), all of the download processing of the control program is completed.

After completion of the download processing, the DKC download controller 205 reports the service information message (SIM), for informing that the automatic upload is completed, to the maintenance management server 102 in the maintenance center (step 456).

Then, the DKC download controller 205 instructs the program update controller 202 to apply the downloaded control program ( step 458). The instructed program update controller 202 reads out the corresponding control program from the program file 206 and executes the exchange processing of the control program of the processor built in the CHA and DKA (step 460). When the program exchange processing is completed, the program update controller 202 reports the service information message (SIM), for informing that the automatic update is completed, to the maintenance management server 102 (step 462).

As is above described, the program automatic update processing is completed and the continuous execution of the processing of the automatic upload and automatic update of the control program by the instruction from the maintenance management server is completed.

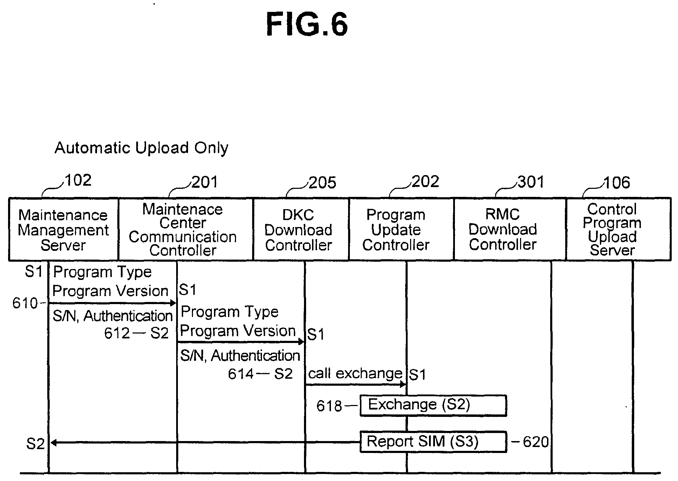

FIG. 6 is a sequence chart showing the operation of executing the automatic upload only of another embodiment of the invention. Basically it is similar to the automatic upload operation at the continuous execution of the automatic upload and automatic update operation shown in FIG. 5, and the processing is completed at the moment the control program is stored in the program file 206 inside the DKC.

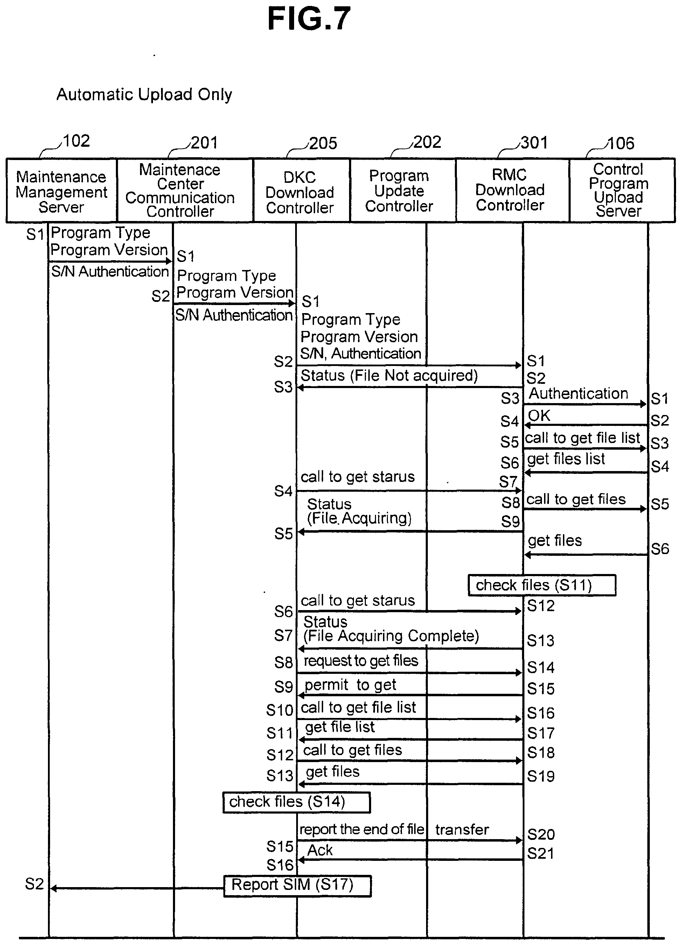

FIG. 7 is a sequence chart showing the operation of executing the automatic update only of yet another embodiment of the invention. The sequence can be used when applying the update of the control program in the state only the automatic upload is completed shown in FIG. 5. First, as is similar to the sequence of FIG. 5, the maintenance management server 102 transmits the Program Type of the control program, the Program Version, the serial number of the object DKC and the authentication data to the maintenance center communication controller 201 in the DKC 110 through the public network (step 610). The maintenance center communication controller 201 transmits said data received in the process 201-S1 to the DKC down load controller 205 (step 612). The instructed DKC download controller 205 instructs the exchange of the corresponding control program to the program update controller 202 (step 614). The instructed program update controller 202 executes the exchange processing of the corresponding program similarly to the sequence of FIG. 5 (step 618).

When the control program exchange processing is completed, the program update controller 202 reports the Service Information Message (SIM) for informing that the automatic update is completed to the maintenance management server 102 (step 620) and the automatic update processing of the control program is completed.

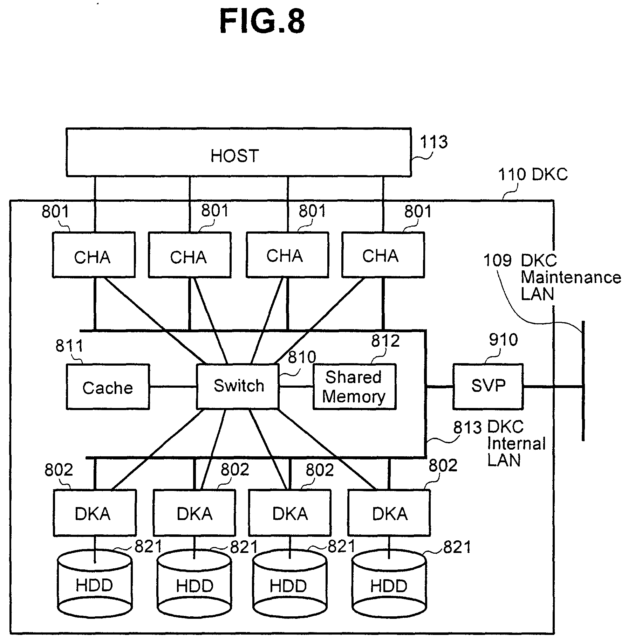

FIG. 8 is a hardware structural diagram showing the internal structure of the DKC 110 of an embodiment of the present invention. The DKC 110 comprises two or more channel adapters (CHA) 801 which control connection interfaces with a HOST 113, two or more disk adapters (DKA) 802 which control interfaces with the hard disk drives (HDD) 821, a Switch 810 to execute data transfer among these adapters, a Cache 811 which temporarily stores the data transferred from the HOST 113, a shared memory 812 which stores the configuration data of the DKC 110 and can be commonly used by all of adapters, an SVP 910 which monitors the failure of the DKC 110, instructs the recovery at the failure, or executes the exchange instruction of the control program, and a DKC internal LAN 813 for the communication of maintenance data between the corresponding SVP and the adapters. The SVP 910 executes the transfer of the maintenance data with the other DKC 111 and DKC 112 connecting with the DKC maintenance LAN 109. The control program is a program operating on the processor mounted on each adapter. The control program is transferred from the SVP and the processor of each adapter is blocked, exchanged, or recovered according to the instruction from the SVP. The exchange of the control program is possible while the DKC 110 accepts an I/O from the HOST 113 and is executing the processing.

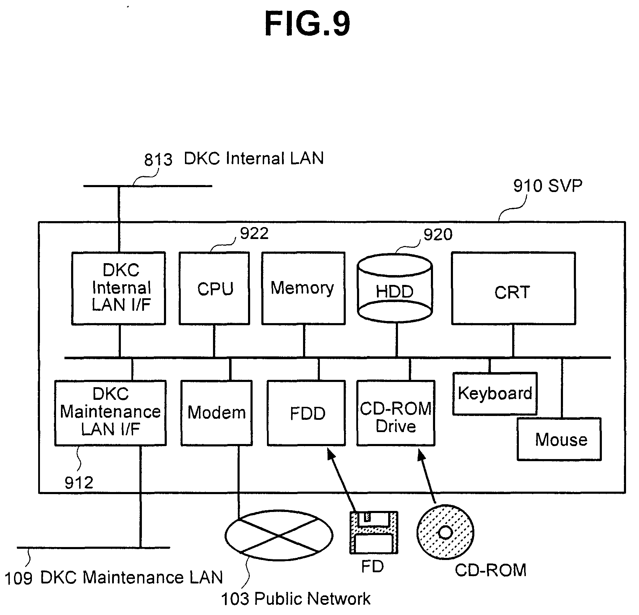

FIG. 9 is a hardware structural diagram showing the internal structure of the SVP 910 of an embodiment of the present invention. The SVP is a personal computer and comprises the kinds of hardware components with which the personal computer is generally equipped. The SVP 910 is characterized in that it is equipped with an LAN interface with the DKC maintenance LAN 109, an LAN interface with the DKC internal LAN 813, and a modem for the connection with the public network 103. The software, for example, that is described in FIG. 3A for the SVP is stored in HHD 920 and is operated on by processor 922.

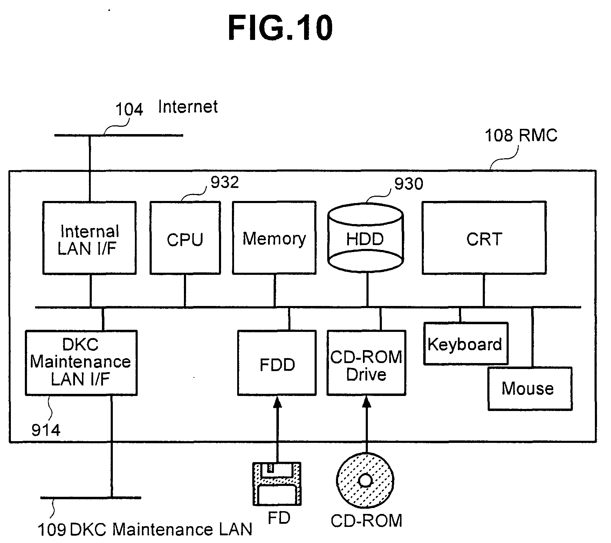

FIG. 10 is a hardware structural diagram showing the internal structure of the RMC 108 of an embodiment of the present invention. The RMC is a personal computer similarly to the SVP and comprises the kinds of hardware components with which the personal computer is generally equipped. The RMC 108 is characterized in that it is equipped with an LAN interface with the Internet 104 and an LAN interface with the DKC maintenance LAN 109. The software, for example, that is described in FIG. 4A for the RMC is stored in HHD 930 and is operated on by processor 932.

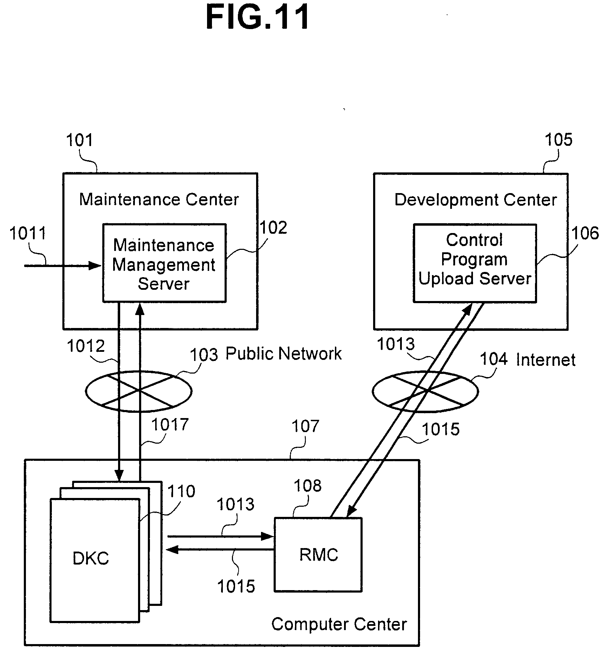

FIG. 11 is a data flow diagram showing the flow of data among the centers of one embodiment of the present invention. The following is step-by-step description of the flow of data shown in this embodiment of the present invention.

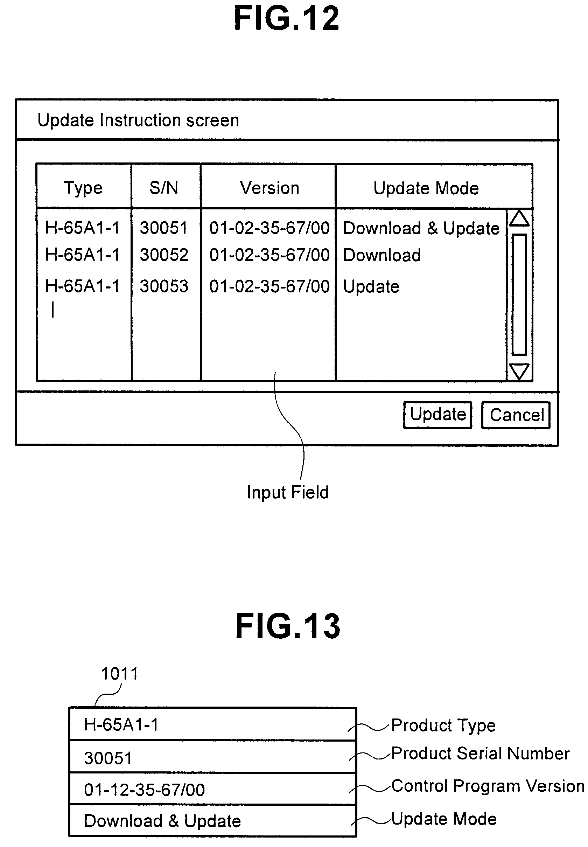

The maintenance management server 102 accepts the data input of the unit type of the DKC which is the object of the exchange, manufacturing number (hereafter, described as S/N), the version of exchanging control program and the update mode. These input data is shown as 1011 in FIG. 11. FIG. 13 shows the data format of the data 1011 and specific values as an example. The foregoing description is with the Program Type of the control program, however, in this case, the unit type is used. Both data can be the objects. FIG. 12 is an example of update instruction display screen displayed on the maintenance management server 102. The update mode can be selected from the following three kinds.

"Download & Update" mode is a mode downloading the control program to the DKC and executing the exchange of the control program. In the "Download" mode, the control program is downloaded into the DKC, but the exchange of the control program is not instructed. For the convenience of the operation plan in the computer center 107 of the customer, the time of exchange will be selected when the execution of it is requested at another chance. Therefore, at the time the exchange can be executed, the exchange can be executed by selecting the "Update" mode. The "Upgrade" mode is the mode to execute the exchange processing only using the control program transferred by the "Download" mode beforehand.

FIG. 12 shows that each of the "Download & Update" mode, "Download" mode and "Update" mode is instructed to the three DKCs. "01-02-35-67/00" as an applied version and "H-65A1-1" as a unit type are input. These input data are input as the data format of 1011 shown in FIG. 13 by the maintenance management server 102. Other DKCs also use the data format of 1011.

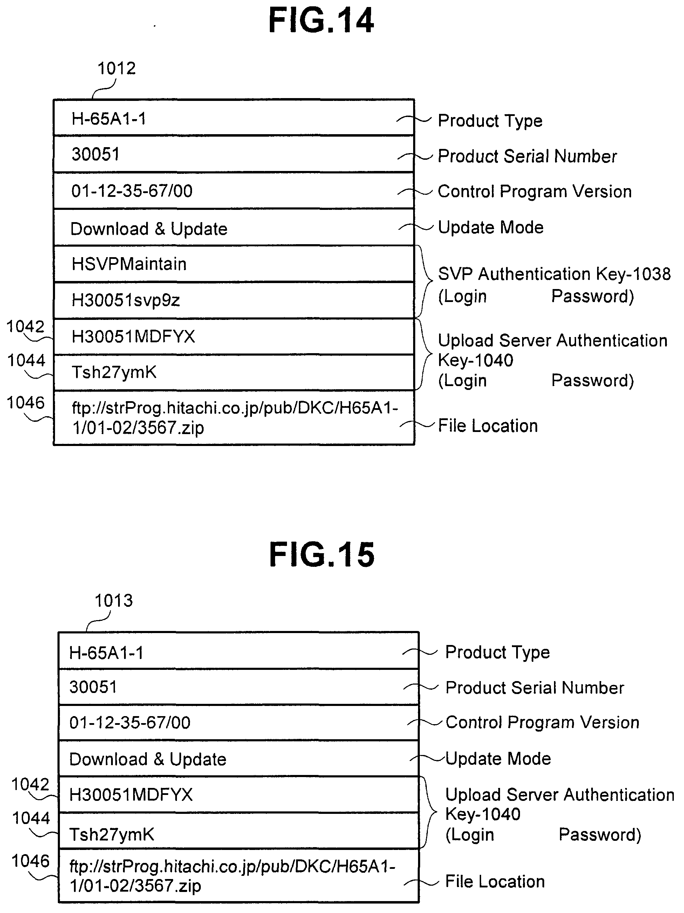

As shown in FIG. 11, the maintenance management server 102 which has accepted the input of the data 1011 transfers the data to the DKC 110 as the data 1012 through the public network 103. The data format of the data 1012 is shown in FIG. 14. FIG. 14 shows the data format of the data 1012 to be transferred to the SVP 910 by the maintenance management server 102. As shown in FIG. 14, an SVP authentication key 1038 (Login and Password for connection with the SVP), an upload server authentication key 1040 (Login 1042 and Password 1044) requested for connecting with the control program upload server 106 in the development center 105, and the file location 1046 of the control program inside the control program upload server are added to the data format of the data 1011. The SVP authentication key is shown in a data format in FIG. 14; however,, this data is typically transferred before connecting with the SVP in the DKC 110 through the public network. The SVP authentication key is necessary for security in order to prevent illegal connection via the public telephone network. Here, the SVP authentication key is treated as a fixed value. It will be easily understood that this fixed value can be changed by realizing the update logic of the Login and Password by the protocol between the maintenance management server 102 and the SVP 910. In one embodiment of the present invention, the upload server authentication key is treated as a fixed value. This data is required for connecting the RMC 108 with the control program upload server 106. The file location is data, which can be decided uniquely according to the unit type and the control program version. This can be realized by the regulated method of layout of the control program stored on the control program upload server 106. The file information 1046 is previously transferred from the control program upload server 106 to the maintenance management server 101 via, for example, mail, Internet connection, or public telephone network.

As shown in FIG. 11, the SVP 910 in the DKC 110 receiving the data with the data format 1012 transfers the data to the RMC 108 with the data format 1013. The data format 1013 is shown in FIG. 15. FIG. 15 is a drawing showing the data format 1013 with which the SVP 910 in the DKC 110 transfers to the RMC 108. As shown in FIG. 15, the data format 1013 is the data format in which the SVC authentication key 1038 is deleted from the data format 1012.

In FIG. 11, the RMC 108 receiving the data with the data format 1013 connects with the control program upload server 106 through the Internet 104. In this connection, the accessing is executed with the 1013 data format. As an example, "ftp", which is the file transfer protocol of the TCP/IP, is used. In the connection with the control program upload server 106, the upload server authentication key is used. Succeeding in the connection, the control program 1015 is returned from the control program upload server 106. The RMC 108 transfers the received control program 1015 to each DKC and instructs the exchange. In this case, the instruction based on the update mode indicated by the received data 1013 from the SVP 910 is possible. The SVP 910 receives the control program 1015, instructs the exchange of the control program to the processor mounted on each adapter, and receives the result of the exchange processing. Then, the SVP 910 transfers the result of the exchange processing 1017 to the maintenance management server 102 through the public network 103.

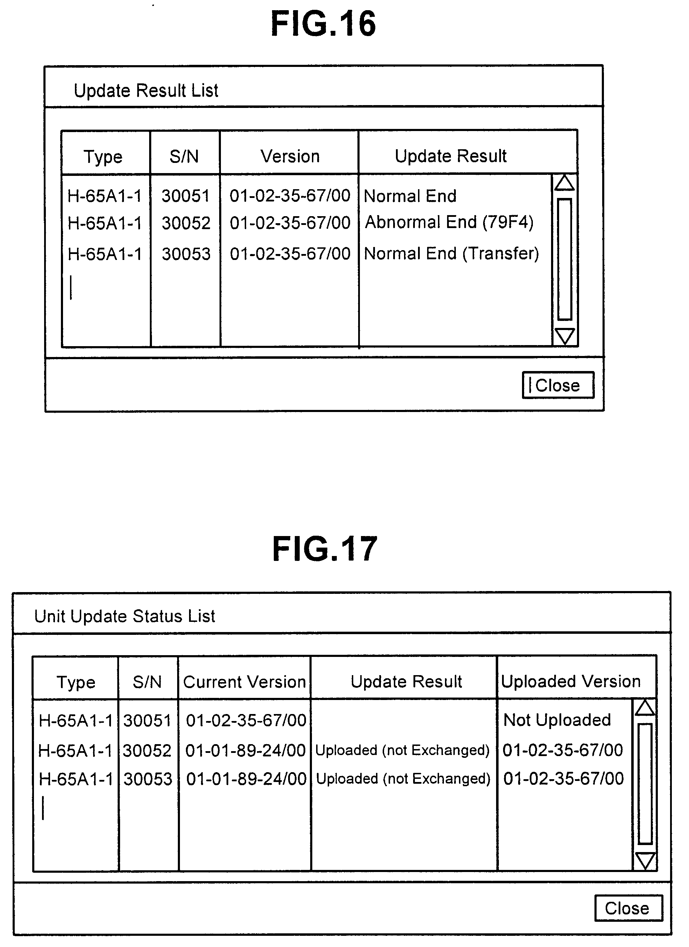

FIG. 16 shows a screen of a list of the update results displayed by the maintenance management server 102 receiving the results of the exchange processing 1017. FIG. 16 shows that the exchange processing for the DKCs indicated with the serial numbers of 30051 and 30053 were executed as instructed. The DKC indicated with the serial number of 30052 failed in the exchange processing and abnormally ended. "(79F4)" in FIG. 16 is an error code indicating the detail of the abnormal end and indicates that the next recovery measure can be executed quickly with this.

FIG. 17 is an example of the result of the acquisition of the update status of current DKC's from the maintenance management server 102. The update status of the control program of the DKC in the protocol between the SVP in the DKC and the maintenance management server is acquired, and the currently operating Version, Uploaded version, and etc. can be displayed. Therefore, the maintenance management server 102 can instruct the next update of the control program.

In an embodiment of the present invention, the method of treating the file locations of the update server authentication key and the control program as the fixed values is described.

Next is the description of the acquisition of the file locations of the update server authentication key and the control program at each time the update request is generated of an embodiment of the present invention .

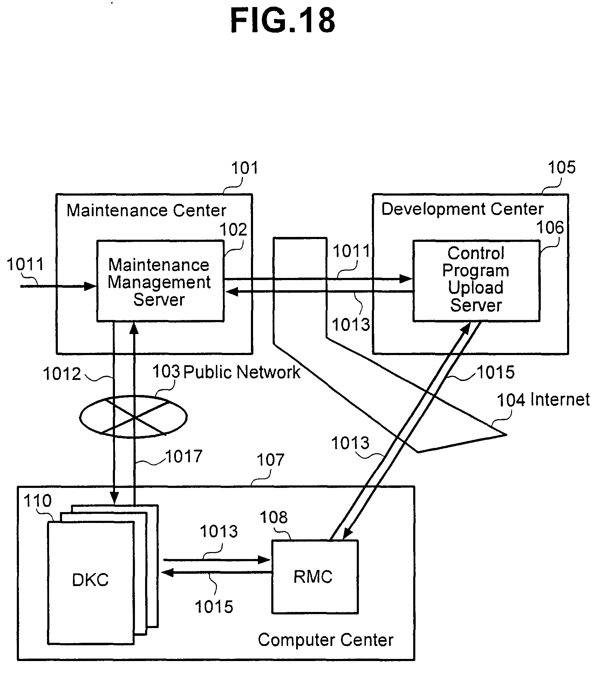

FIG. 18 is a data flow diagram executing a second embodiment of the present invention. The data flow of FIG. 18 is formed by adding a flow of acquiring the control program upload server authentication key 1040 and the file location 1046 of the control program shown in FIG. 11 from the control program upload server 106 after the maintenance management server 102 has accepted the input of the 1011 data. The maintenance management server 102 and the control program upload server 106 are connected by the Internet 104. The maintenance management server 102 connects with the control program upload server 106 using the input data 1011 and acquires the data format 1013. The control, hereafter, is the same as described in the example of the previous embodiment of the present invention. Therefore, the arbitrary acquisition of the authentication key and the file locations which have been treated as fixed values is enabled and the independent operation of each of the maintenance center 101 and the development center 105 is enabled. These two centers are generally operated by a same company; however, recently there exist maintenance companies providing only the maintenance centers, that is, the operating company is not necessarily a single company. In such cases, the operation will typically require mutual agreement beforehand.

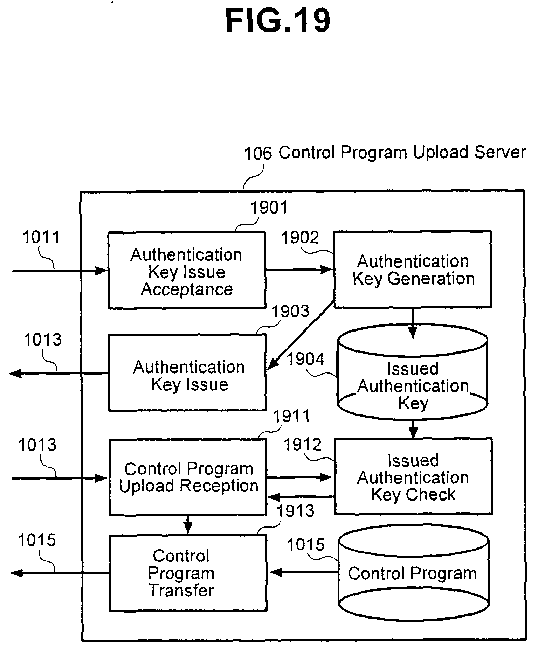

In the second embodiment of the present invention, the authentication key is issued to each required DKC; therefore, the identification check of it with the issued authentication key can be enabled for the acquisition request from the RMC 108. Typically, the development center 105 issues the authentication key (included in the data 1013) for the exchange request accepted by the maintenance management server 102. The development center 105 retains the issued authentication key and identifies the authentication key transmitted at the connection request from the RMC 108. Whether the transmitted authentication key is the authentication key which has been already issued and the matching of the applied unit type of the DKC and the serial number are checked. If these match as the result of the check, the request from the RMC 108 is decided to be correct and the corresponding control program 1015 is returned. The software configuration necessary for the control program upload server 106 on the side of the development center 105 to execute the authentication logic is shown in FIG 19.

FIG. 19 is a configuration diagram of software executed in the control program upload server 106. The authentication key issue acceptance 1901 accepts the data 1011 transmitted from the maintenance management server 102. The authentication key generation 1902 generates the authentication key based on the accepted data 1011 and stores it into the issued authentication key 1904. The authentication key issue 1903 transmits the data 1013 added with the generated authentication key and the file location data of the control program to the maintenance management server 102. The control program upload reception 1911 accepts the data 1013, which is the upload request, transmitted from the RMC 108. The authentication key check 1912 decides whether the authentication key included in the data 1013 accords with the issued authentication key retained in the issued authentication key 1904. If it validates , the control program transfer 1913 transmits the control program 1015 to the RMC 108. If not, access from the RMC 108 is rejected.

The issued authentication key 1904 file maintains a log of past issued authentication keys. The number of past keys maintained is either a predetermined number or based on a predetermined time period. All keys over the predetermined number or created at a time earlier than the predetermined time period are discarded. The purpose of the key log is to account for the delay in time from when the key is created at the development center 105, sent to the maintenance center 101, and downloaded to the computer center 107. During this delay period the computer center 107 is still using the old authentication key. In order to allow the computer center 101, during this delay to receive updates from the control program update server 106, the authentication key sent by the RMC 108 must match any key in the key log in the issued authentication key file 1904, rather than the newest key. If there is a match the key received from the RMC 108 is validated and the control program is downloaded to the RMC 108.In the above-described preferred embodiment, the examples of executing the exchange of the control programs based on the update data input by the maintenance management server 102 are explained. Then, the issuance of the update request by the customers themselves having the DKC 110, 111 and 112 using the Internet 104 is assumed. The following is the description of a third embodiment of the present invention where the customers issue the update requests by themselves.

In the third embodiment of the present invention, the method of the issuance of the update request by the customer is described. Basically, the customer purchases the DKC 110,111 and 112 from a sales company. Generally, the device manufacturing company and the sales company are the same; however, as seen with recent OEM sales, there are cases where the manufacturing company and the sales company are different. In such case, the manufacturing company improves the control program and informs the sales company of the improvement, and the sales company presents the improvement of the control program to the customer, accepts a request for revision from the customer, and releases the upgraded program.

In the third embodiment of the present invention, the case that the customer desires the update of the program of the corresponding DKC based on the issued version up information, is assumed.

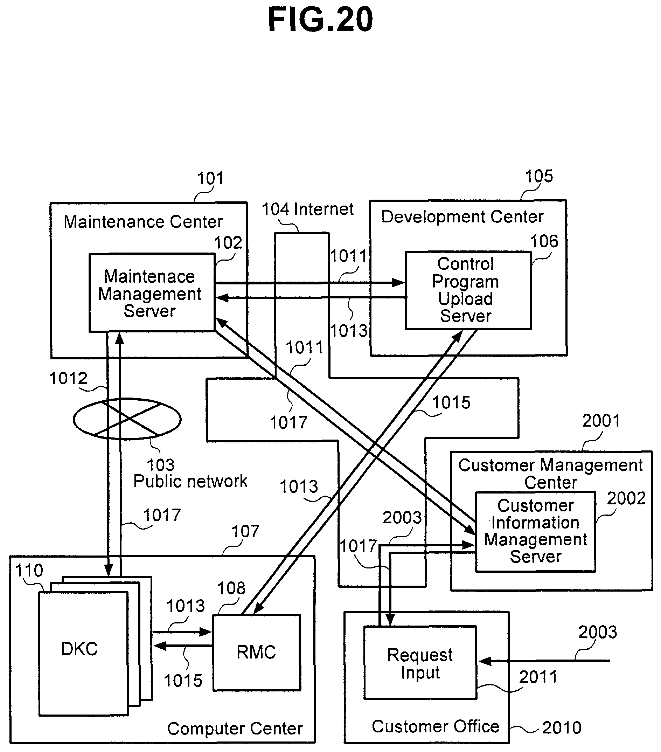

FIG. 20 shows the data flow in case of a customer issuing the update request of an embodiment of the present invention. The difference of it from the data flow diagram (FIG. 18) shown as the example in the second embodiment of the present invention is that it is equipped with the customer office 2010 and the customer management center 2001.

The customer issues the update request from the request input 2011 in the customer office 2010. The customer operates and administrates the computer center 107. As shown in FIG. 20, the customer who takes the responsibility of operating and administrating does not necessarily reside at the computer center 107. The case that the customer resides at another customer office 2010 than the computer center 107 is assumed.

It is also assumed that the customer management center 2001 is the sales company of the DKC units. The customer management center 2001 manages the information regarding to the customers. It is also assumed that the development center 105 is the manufacturing company of the DKC units.

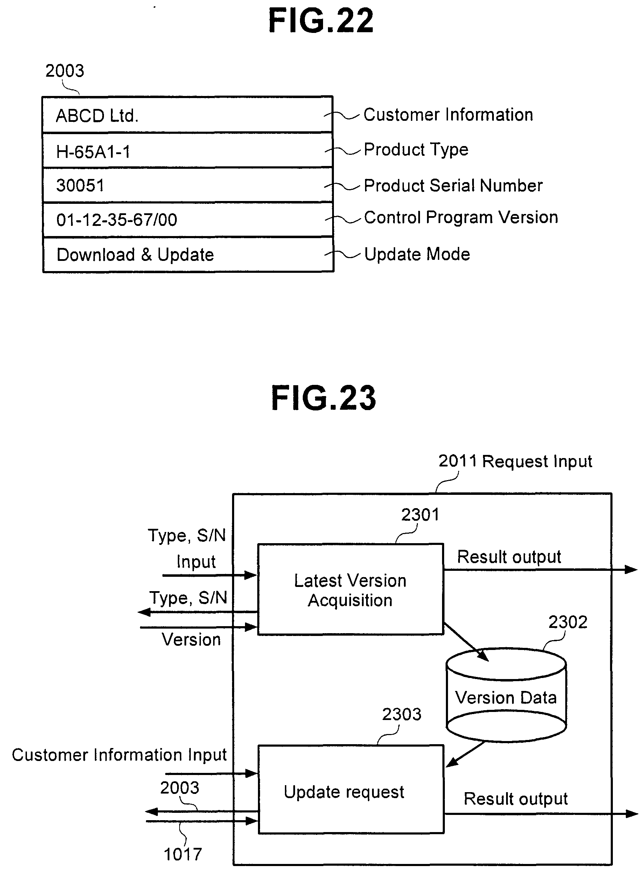

The customer inputs the data 2003 using the request input 2011. FIG. 22 shows the detail of data 2003. FIG. 22 is a data format diagram of the data 2003. As shown in FIG. 22, the data 2003 comprises the format of the data 1011 added with the "Customer Information". The "Customer Information" shown in FIG. 22 treats the name of company as the value. This information can be not only the company name but may also include, the name of manager, the name of the department, or the information of the dealing account exchanged between the customer company and the sales company.

This information is transferred to the customer information management server 2002 installed in the customer management center 2001 using the Internet 104. The communication path must be encoded beforehand, since the information concerned with the dealings is included in the communication path. Regarding to the encoding of communication paths, the technologies of the SSL and the VPN are known generally.

The customer information management server 2002 converts the received data 2003 to the data 1011 and transfers to the maintenance management server 102. Typically, the data 1011 can be generated by deleting the customer information from the data 2003. Operation after receiving the data 1011 is the same of that of the examples of the second embodiment of the present invention. Finally, the result of the exchange processing 1017 received from each DKC after completing the exchange processing is transferred to the customer information management server 2002 and the customer information management server 2002 transfers it to the customer request input 2011 via Internet 104. Thus the customer at customer office 2010 can view screens similar to Figs. 16 and 17 and see real-time updates like that seen in the Maintenance center. This is even more feasible with the rate of increase in network speed and bandwidth. The result of this method of doing business is to provide the customer with direct real-time information on the status of the customer's updates. This is different than the typical written report sent to the customer by mail either from the customer management center 2001 or the maintenance center 101.

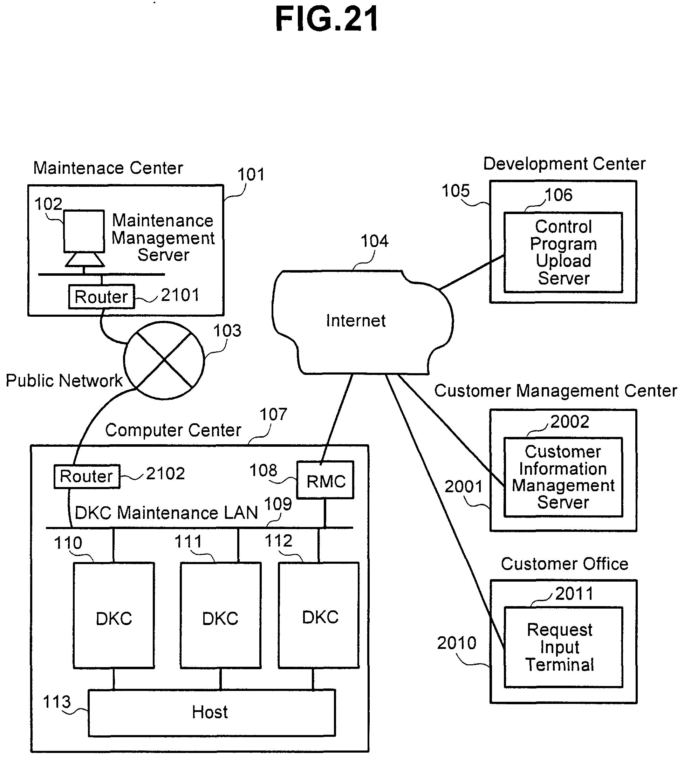

In the above described embodiment of the present invention, the configuration of the connection between the maintenance center 101 and the computer center 107 by the public network 103 was explained. The configuration of a hardware connection in case that this connection is replaced with a LAN is described. FIG. 21 is a hardware connection configuration diagram when the public network 103 connection between the maintenance center 101 and the computer center 107 is a TCP/IP network of another embodiment of the present invention.

In this case, each of dial-up routers 2101 and 2102 is connected between the maintenance center 101 and the computer center 107. With this, the maintenance data of the DKC unit can be realized as a computer network using TCP/IP. This can be applied not only for the transfer of the control programs , but also for the transfer means of the maintenance data (failure data and etc.) of the DKC unit.

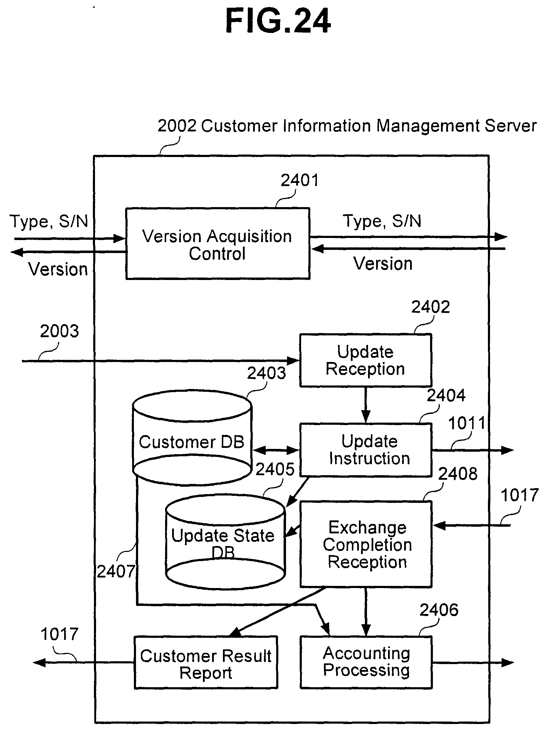

FIG. 23 is a software configuration diagram of the request input 2011 of an embodiment of the present invention. The Latest Version Acquisition 2301 accepts the unit type and the serial number (S/N) of it from the customer, and transfers them to the customer information management server 2002. The operation at the customer information management server 2002 will be described later referring to FIG. 24. The customer information management server 2002 acquires the latest Version data from the DKC 110, 111 and 112 through the maintenance management server 102, and returns to the request input 2011. The latest Version acquisition 2301 outputs the acquired Version to CRT, etc. and stores it into the Version data 2302. Thus the customer can see the status on a display of all his/her control programs. If the acquisition takes time, the interface with the customer can be closed temporarily after displaying the message of temporary closure. In this case, the Version received from the customer information management server 2002 can be temporarily stored into the Version data 2302 and the Version data that the customer stored can be referred at another opportunity.

The update request 2303 accepts the update request from the customer. In this case, the unit type, the serial number, the version requested to be updated, and the customer information are input. The amount of data that needs to be inputted by the customer may be reduced by utilizing the data stored in the Version Data 2302. After the input, the update request 2303 transfers the data 2003 to the customer information management server 2002. This request 2003 is transformed into request 1011 which is sent to the computer center 107 via the maintenance center 101. As discussed above the resulting feedback from the computer center 107 is in the format 1017. The update request 2303 receives the update result as 1017 from the customer information management server 2002 and outputs it to a display similar to Figs. 16 or 17. If the processing takes time, the update result can be received, stored, and output at another opportunity to the customer after closing temporarily the interface with the customer . In another embodiment the customer management center may have a Web site in which the customer's update information is posted. By logging on to the Web site, the customer may view a personalized and secure Web page having information like Figs. 16 or 17.

FIG. 24 is a software configuration diagram of the customer information management server 2002 of an embodiment of the present invention .

The Version acquisition control 2401 transfers the latest Version acquisition request received from the request input 2011 to the maintenance management server 102, receives the latest Version data acquired by the maintenance management server 102, and returns the result to the request input 2011. The update reception 2402 receives the 2003 data transmitted from the request input 2011. This is the update data requested from the customer. The update instruction 2404 searches for the customer and the related customer information in the customer DB 2403 based on the 2003 data and transfers the update instruction as the data 1011 to the maintenance management server 102. The contents of the update instruction are stored into the update status DB 2405 together with the customer information. The exchange completion reception 2408 receives the update result 1017 from the maintenance management server 102, searches which customer requested the corresponding result in the update status DB 2405, and returns the result with the customer result report processing based on the customer information to the request input 2011. When the update result indicates "normal end", the accounting processing 2406 executes the charging of the cost to the corresponding customer. In one embodiment, there is an automatic transfer of the amount from a pre-established account . In another embodiment, a request for payment is executed to a card company based on the credit card number of the customer's credit card registered beforehand. This method can be automated using the Internet 104.

In the above-described embodiment of the present invention, the connection between the maintenance center 101 and the computer center 107 is through the public telephone network 103; in an alternative embodiment all of the connections use the Internet 104. In this case, the security must be established in the maintenance center 104 and each of DKC 110, 111 and 112 of the computer center 107. This can be realized by the use of the security assured TCP/IP connection as Virtual Private Network (VPN) and the encoded communication layer as SSL. As shown in the above-described embodiment, since the authentication key data is used to SVP, this can be executed by applying the data to the VPN and the SSL.

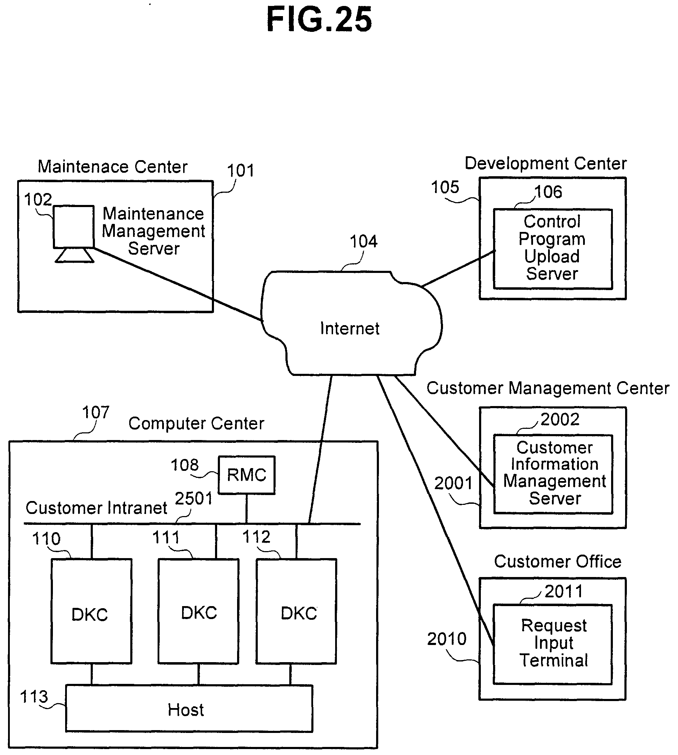

FIG. 25 shows a hardware connection diagram in case of the Internet connecting among the maintenance center 101, the development center 105, the computer center 107, the customer management center 2001, and the customer office 2010 of an embodiment of the present invention .

Arranging a customer Intranet 2501 inside the computer center, the corresponding customer Intranet 2501 is connected to the DKC 110, 111 and 112, and the RMC 108. Connection method to the Internet 104 will be various depending on the connecting policy of the corresponding customer Intranet, and it is not mentioned here. As an example, the Intranet 2501 maybe connected to the Internet 104 through a Firewall.

In this method of connection, the DKC maintenance LAN interface 912 shown in FIG. 9 is replaced with a customer Intranet LAN interface in the SVP 910 of each DKC. In the RMC 108, the DKC maintenance LAN interface 914 shown in FIG. 10 is replaced with the customer Intranet LAN interface, the connection interface with the Internet 104 shown in FIG. 10 is eliminated, and all the data communicated with the Internet 104 before is connected to the Internet 104 through the customer Intranet 2501. Accompanying this, the necessity of preserving the security of the SVP 910 and the RMC 108 arises.

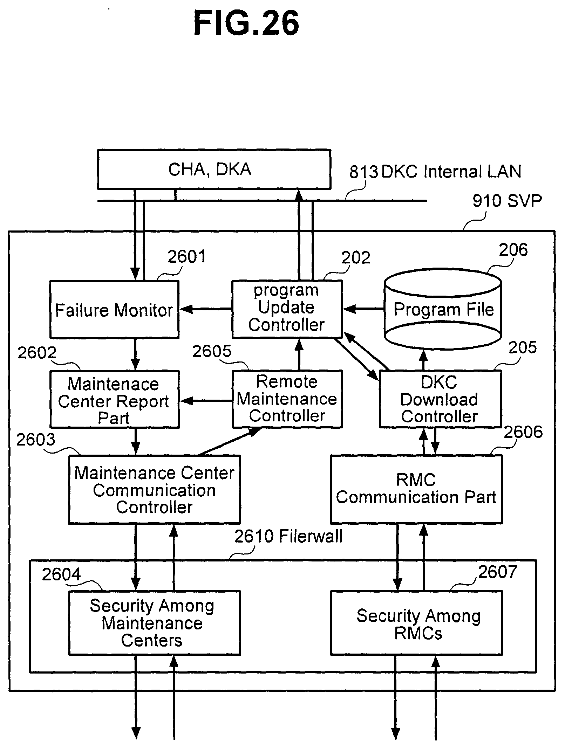

FIG. 26 shows a software configuration diagram, wherein the SVP 910 is connected with the customer Intranet 2501 of an embodiment of the present invention . The SVP 910 is connected with the DKC internal LAN 813 and communicates with the CHA and the DKA. The failure monitor 2601 monitors the occurrence of failures in the CHA and DKA. The exchange of the control program is also the object of it. The maintenance center report part 2602 is connected to the maintenance center communication controller 2603 and transfers the failure information (not limited to failures but include general maintenance data) from the failure monitor 2601 to the maintenance management server 102. The maintenance center communication controller 2603 performs the communication for reporting the data from the maintenance center report part 2602 to the maintenance center, receives the data instructed from the maintenance management server 102, and starts up the remote maintenance controller 2605 according to needs. The security among the maintenance centers 2604 is a logic for security protection with the data exchange with the maintenance management server 102. Specifically, it is the Firewall executing the check of connection request from the external network, the VPN construction at data transfer, the establishment of the encoded communication paths by the SSL, etc.

When the exchange instruction of the control program is given by the maintenance management server 102, the remote maintenance controller 2605 is activated and activates the DKC download controller 205 or the program update controller 202. The RMC communication part 2606 is a logic executing data exchange with the RMC 108. The security among RMC 2607 is a logic reserving the security of the data exchange with the RMC 108. It may be equipped with the Firewall function equivalent to the security among the maintenance centers 2604.

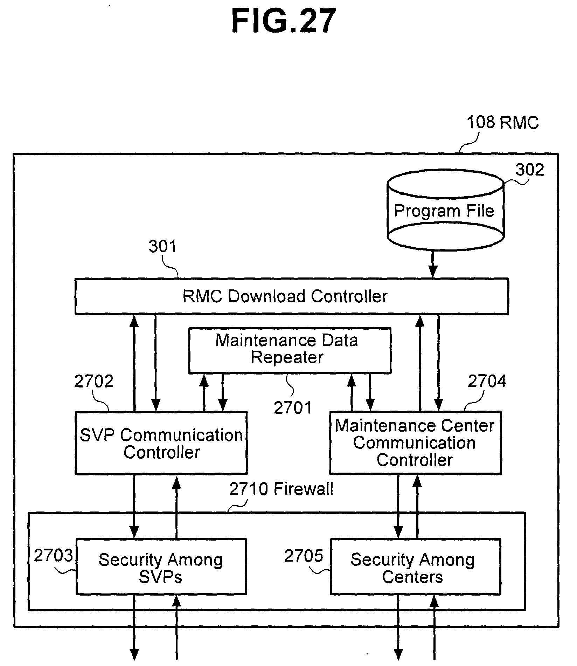

FIG. 27 is a software configuration diagram of the RMC 108 equipped with a security function of an embodiment of the present invention . It is equipped with the security among SVP 2703 and the security among centers 2705 as the Firewall 2710. The security among SVP 2703 is a logic for preserving the security in executing communication with the SVP. The security among centers 2705 is a logic for preserving the security in executing communication with the control program upload server 106. The RMC download controller 301 is connected with the SVP communication controller 2702, the maintenance center communication controller 2704, and an interface, and realizes the data communication processing. It is connected with the maintenance data repeater 2701 to enable the gateway connection between the SVP 910 and the maintenance manager server. The maintenance data repeater 2701 realizes the bridge of the data exchange between the SVP communication controller 2702 and the maintenance center communication controller 2704.

As described above, according to some embodiments of the present invention, the time required for the transfer of the control program can be reduced and the concurrent transfer of the control program to two or more computer centers is enabled by using the Internet already installed. By transmitting the control program update instruction and the authentication data from the maintenance center to the computer center directly through the public telephone network, the risk of an intentional update of the control program by a third person can be reduced.

Although the above functionality has generally been described in terms of specific hardware and software, it would be recognized that the invention has a much broader range of applicability. For example, the software functionality can be further combined or even separated. Similarly, the hardware functionality can be further combined, or even separated. The software functionality can be implemented in terms of hardware or a combination of hardware and software. Similarly, the hardware functionality can be implemented in software or a combination of hardware and software. Any number of different combinations can occur depending upon the application.

Many modifications and variations of the present invention are possible in light of the above teachings. Therefore, it is to be understood that within the scope of the appended claims, the invention may be practiced otherwise than as specifically described.

## Claims

1. A system for updating a control program comprising:
a stored control program unit;
a maintenance management server coupled with the stored control program unit via a public network; wherein
when the maintenance management server sends an instruction to update the control program to the stored control program unit, the maintenance management server sends authentication data to the stored control program unit through the public network; and
a control program upload server coupled with the stored control program unit; wherein the control program upload server, after receiving and validating the authentication data via Internet, sends a control program update for processing by the stored control program unit.

2. The system of claim 1 wherein the control program upload server maintains a key history file comprising a plurality of issued authentication keys, wherein said authentication data comprises one key of said plurality of issued authentication keys.

3. The system of claim 1 wherein said stored control program unit, comprises:
a maintenance communication module for receiving said instruction and said authentication data from said maintenance management server,
a device download controller module for receiving the control program transferred from said control program upload server,
and a program update module for storing said control program received by said device download controller module to a memory.

4. The system of claim 1 wherein said stored control program unit, comprises a maintenance communication module for receiving said instruction and said authentication data from said maintenance management server, and a program file for receiving the control program transferred from said control program upload server.

5. The system of claim 1 further comprising a repeater unit, comprising one gate coupled with said stored control program unit through a Local Area Network, and another gate coupled with the Internet, wherein when commanded by said stored control program unit, said repeater unit transfers said control program from said control program upload server to said repeater unit, prferably only when said control program is not stored in said repeater unit.

6. A method for updating a control program stored in a computer system at a first location, by transferring an update control program from an update server at a second location to said computer system at said first location via Internet, said method comprising:
sending an update command from a maintenance server at a third location to said computer system via a first communications network, said update command comprising at least one instruction for said computer system to get said update control program from said update server;
executing said command by said computer system;
receiving said update control program by said computer system from said update server via a second communications network, including the Internet; and
updating said control program with said update control program.

7. The method of claim 6 wherein said control program is a control program of a device controller or of a disk controller.

8. The method of claim 6 wherein said computer system comprises a download controller coupled with a device controller, and wherein said device controller comprises said control program, and said receiving further comprises:
downloading said update control program from said update server by said download controller; and
sending said update control program from said download controller to said device controller.

9. The method of claim 6 further comprising sending authentication data from said maintenance server to said computer system, and using said authentication data to establish a connection between said computer system and said update server.

10. The method of claim 6 wherein said executing said command comprises establishing a file transfer protocol (ftp) connection with said update server.

11. The method of claim 6 further comprising returning a status of the updating to said maintenance server.

12. A remote console system for maintaining a control program of a disk controller (DKC) of a plurality of disk controllers, said disk controller comprising a Service Processor (SVP), said remote console system comprising a remote console download controller coupled with said SVP and operably disposed to:
receive a file transfer request from said SVP, said file comprising said control program;
send said file transfer request to an update server;
receive said file from said update server; and
send said file to said SVP.

13. A storage device maintenance method for updating a control program stored by a device controller of a storage system, said method comprising:
receiving information, comprising authentication data, by said storage system related to updating said control program via a first communication connection;
sending a request, comprising said authentication data, for an updated control program to an upload server via a second communication connection, comprising an Internet connection;
receiving said updated control program from said upload server via said second communication connection; and
using said updated control program to update said control program.

14. The method of claim 13 wherein said authentication data comprises upload server password and log-in identifier.

15. The method of claim 13 wherein said request further comprises control program version information.

16. A storage system for maintaining a control program of a disk controller (DKC) comprising:
a first disk controller of a plurality of disk controllers, wherein said first disk controller receives information, comprising authentication data, related to updating said control program from a maintenance center via a public network; and
a download controller responsive to said first device controller and coupled with said plurality of device controllers, wherein said download controller performs operations comprising:
sending a request, comprising said authentication data, for an updated control program to an update server via an Internet connection;
receiving said updated control program from said update server via said Internet connection; and
distributing said updated control program to said plurality of disk controllers.

17. The system of claim 16 wherein said public network is a network comprising a router, wherein said router is coupled with said maintenance center and said computer center.

18. A maintenance system for updating a control program of a device controller, said control program stored at a computer center serviced by said maintenance center, said system comprising:
a storage system for storing an authentication key for accessing a development center, comprising an upload server, and a file location having a location of an updated control program on said upload server, wherein said authentication key and said file location are received from said upload server;
a processor for sending information, comprising an instruction, said file location and said authentication key, to said computer center a via public network, said instruction requesting an updated control program from said upload server; and
an update feedback module for receiving a result of executing said instruction by said computer center.

19. The maintenance system of claim 18 further comprising an input module for receiving a user request comprising said instruction, said request preferably also comprising a product type, a product serial number, and a control program version.

20. The maintenance system of claim 18 wherein said result is displayed on a display screen, said result comprising an update result.

21. The maintenance system of claim 18 wherein said result is further sent to a customer management center, said result being preferably sent from said customer management center to a user, and preferably displayed real-time to said user.

22. A computer readable medium for storing code for updating a control program of a stored control program unit, said computer readable medium comprising:
code for receiving information, comprising authentication data, by said computer center related to updating said control program via a first communication connection;
code for sending a request, comprising said authentication data, for an updated control program to an upload server via a second communication connection, comprising an Internet connection; and
code for receiving by a download controller said updated control program from said upload server via said second communication connection.

23. The computer readable medium of claim 22 further comprising code for distributing said updated control program from said download controller to said stored control program unit.

24. A storage device maintenance system for transferring an update to a control program used in a device storage system, comprising a plurality of disk controllers, from a control program upload server via an Internet connection, comprising:
a maintenance management server for sending an instruction to update the control program;
a specialized device controller of the plurality of device controllers for receiving the instruction from the maintenance management server through a public telephone network;
a remote console download controller coupled with the specialized device controller, the specialized disk controller processing the instruction and instructing the remote console download controller to download the update from the control program upload server via the Internet, wherein the update is stored in a first program file coupled with the remote console download controller; and
the plurality of disk controllers coupled with the remote console download controller for receiving the update from the first program file.

25. The computer system of claim 24 wherein a disk controller of the plurality of disk controllers comprises a DKC download controller, a program update controller, and a second program file, said second program file preferably receiving the update from the first program file, preferably independent of an associated DKC download controller.

26. A system for updating a control program stored at a device controller, said device controller at a computer center, said system comprising:
means for receiving information, comprising authentication data, related to updating a control program from a maintenance center via a first connection;
means for sending a request, comprising said authentication data, for said updated control program to an upload server via a second connection;
means for receiving said updated control program from said upload server via said second connection; and
means for distributing said updated control program to said device controller.

27. A maintenance system for updating a control program, said control program stored at a computer center serviced by said maintenance center, said system comprising:
means for storing an authentication key for accessing a development center, comprising an upload server, and a file location having a location of an updated control program on said upload server, wherein said authentication key and said file location are received from said upload server;
means for sending information, comprising an instruction, said file location and said authentication key, to said computer center a via public network, said instruction requesting said updated control program from said upload server; and
means for receiving a result of executing said instruction by said computer center.

28. A system for updating a control program comprising:
means for sending authentication information to access an update server, having a control program update, to a stored control program unit from a maintenance management server;
means for validating the authentication data received by the update server from the stored program control unit, wherein the update server is coupled with the stored program control unit via Internet; and
means for receiving the control program update by the stored control program unit from the update server.

29. A computer-readable data transmission medium containing a data structure, said data structure for sending information from a maintenance server to a computer center, comprising:
a first portion comprising an update mode for updating a control program in the computer center;
a second portion comprising a server authentication key for access to an upload server having an updated control program; and
a third potion comprising a file location on the upload server of the updated control program.
